# EUROPÄISCHE PATENTANMELDUNG

(11) **EP 1 564 416 A2**
(43) Veröffentlichungstag der Anmeldung: **17.08.2005**
(21) Anmeldenummer: 04029753.3
(22) Anmeldetag: 16.12.2004
(51) Int. Cl.: F15B 13/042, F16K 31/122, G05D 16/16

(54) **Ventil zur Regelung oder Steuerung eines Drucks**

(30) Priorität: 11.02.2004 DE 102004006811
(71) Anmelder: MLS Lanny GmbH, 75323 Bad Wildbad (DE)
(72) Erfinder: Lanny, Michael, 75323 Bad Wildbad (DE)
(74) Vertreter: Leitner, Waldemar, Dr. techn.

(57) **Zusammenfassung**

Die Erfindung betrifft ein Ventil zur Regelung oder Steuerung eines Drucks, welches ein Ventilglied (1) aufweist, das zumindest von einer Ruhestellung, in der durch das Ventilglied (5) der Durchgang zwischen einem Primäranschluß (2) und einem Sekundäranschluß (3) des Ventils (1) gesperrt ist, in eine Arbeitsstellung, in der dieser Durchgang zumindest teilweise freigegeben ist, bewegbar ist, wobei das Ventil (1) mindestens eine Betätigungseinrichtung (21, 31; 41) mit einem Betätigungselement (21', 31'; 41') aufweist, dessen durch eine Druckbeaufschlagung erzeugte Auslenkung auf das Ventilglied (5) übertragbar ist.

Erfindungsgemäß ist vorgesehen, dass das Ventil (1) einen Steuer- oder Regelungseingang (20) aufweist, durch den dem Ventil (1) ein Steuer- oder Regelungsmedium mit einem Steuer- oder Regeldruck P_{S} zuführbar ist, und einen Versorgungseingang (30), durch den dem Ventil (1) ein Versorgungsmedium mit einem Druck P_{M} zuführbar ist, aufweist, dass durch ein Betätigungselement (21') einer ersten Betätigungseinrichtung (21) das Ventilglied (5) mit einer dem Steueroder Regeldruck P_{S} entsprechenden Kraft F_{S} und durch ein zweites Betätigungselement (31'; 41) einer zweiten Betätigungseinrichtung (31; 41) durch eine der der Kraft F_{S} entgegenwirkenden Kraft Fₘₐₓ beaufschlagt wird, dass das zweite Betätigungselement (31') über eine vom Sekundäranschluß (3) abzweigende Verbindungsleitung (36) mit einer Kraft F₁ beaufschlagbar ist, die mit dem Druck P₁ des vom Primäranschluß (2) zum Sekundäranschluß (3) durchtretenden Primärmediums korreliert ist, und dass am Sekundäranschluß (3) das Sekundärmedium mit einem Druck P₂ austritt, der gleich P₂=Pₘₐₓ- f (Pₛ) ist, wobei f (Pₛ) eine Funktion des Steuer- oder Regelungsdruckes Pₛ ist.

## Beschreibung

Die Erfindung betrifft ein Ventil zur Regelung oder Steuerung eines Drucks, welches ein Ventilglied aufweist, das zumindest von einer Ruhestellung, in der durch das Ventilglied der Durchgang zwischen einem Primäranschluß und einem Sekundäranschluß des Ventils gesperrt ist, in eine Arbeitsstellung, in der dieser Durchgang zumindest teilweise freigegeben ist, bewegbar ist, wobei das Ventil eine Betätigungseinrichtung mit einem Betätigungselement aufweist, dessen durch eine Druckbeaufschlagung erzeugte Auslenkung auf das Ventilglied übertragbar ist.

Ein derartiges Ventil ist z. B. aus der EP 1 146 268 der Anmelderin bekannt.

Bei einer Vielzahl von Anwendungszwecken, z. B. bei Schweissrobotem, bei denen eine Schweisszange unter Druck an ein Blech angefügt wird, ist es erforderlich, dass ein Werkzeug, z. B. eine Schweisszange, auf der einen Seite eines Werkstücks mit einem festen Druck und auf der anderen Seite mit einem variablen Druck beaufschlagt wird, wobei bei einem Schweisswerkzeug zu beachten ist, dass die untere Elektrode auch in unterschiedlichen Raumpositionen immer die gleiche Kraft auf das Blech ausübt. Hierzu wird ein doppelwirkender Zylinder eingesetzt, der auf der einen Seite mit einem durch einen Handdruckminderer einstellbaren festen Druck und auf der anderen Seite mit einem über ein Proportianalventil einstellbaren variablen Druck beaufschlagt wird.

Der einfacheren Beschreibung der bei dem bekannten "Druckregelventil", welches durch die Kombination des Handdruckminderers und des Proportionalventils ausgebildet wird, auftretenden Druckanforderungen wird bei der nachfolgenden Darstellung der einfachen Erläuterung halber von einem Versorgungsdruck von 10 bar, von einem vom Handdruckminderer eingestellten Druck von 5 bar und von einem vom Proportionalventil variabel einstellbaren Druck von 0-10 bar ausgegangen. Dem Fachmann ist klar ersichtlich, dass die vorgenannten Werte nur exemplarischer Natur sind und die Allgemeinheit der nachfolgenden Darstellung nicht einschränken.

Befindet sich nun der Schweissroboter in seiner Unten-Stellung, so reicht der vom Proportionalventil maximal erzielbare Gegendruck von 10 bar nicht aus, dass die untere Elektrode der Schweisszange mit dem erforderlichen Druck an das Blech angesetzt werden kann. In nachteiliger Art und Weise muß daher der Druck des Handdruckminderers reduziert werden, um eine hinreichend feste Druckbeaufschlagung der unteren Seite des zu verschweissenden Blechs durch die untere Elektrode zu erreichen.

Die gegenteilige Situation tritt auf, wenn sich der Schweissroboter in seiner Oben-Stellung befindet. Der vom Handdruckminderer erzeugte, den doppelwirkenden Zylinder auf einer ersten Seite beaufschlagende Druck von 5 bar reicht auch dann zu einer sicheren Beaufschlagung des Blechs durch die untere Elektrode nicht aus, wenn der vom Proportionalventil erzeugte, die andere Seite des doppelwirkenden Zylinders beaufschlagende Druck auf 0 reduziert wird. In nachteiliger Art und Weise muß daher manuell der vom Handdruckminderer erzeugte Druck von 5 bar erhöht werden.

Es ist daher Aufgabe der vorliegenden Erfindung, ein Ventil der eingangs genannten Art derart weiterzubilden, dass bei einer Beaufschlagung des Ventils mit einem Steuer- oder Regeldruck sekundärseitig ein zum vorgenannten Druck korrelierter Ausgangsdruck auftritt.

Diese Aufgabe wird erfindungsgemäß dadurch gelöst, dass das Ventil einen Steuer- oder Regelungseingang aufweist, durch den dem Ventil ein Steuer- oder Regelungsmedium mit einem Steuer- oder Regeldruck zuführbar ist, und einen Versorgungseingang, durch den dem Ventil ein Versorgungsmedium mit einem Druck zuführbar ist, aufweist, dass durch ein Betätigungselement einer ersten Betätigungseinrichtung das Ventilglied mit einer dem Steuer- oder Regeldruck entsprechenden Kraft und durch ein zweites Betätigungselement einer zweiten Betätigungseinrichtung durch eine und/oder einer weiteren Kraft der Kraft entgegenwirkenden Kraft beaufschlagt wird, welche mit dem Druck des über den Versorgungseingang zugeführten Versorgungsmedium korreliert ist, dass das zweite Betätigungselement über eine vom Sekundäranschluß abzweigende Verbindungsleitung mit einer Kraft beaufschlagbar ist, die mit dem Druck des vom Primäranschluß zum Sekundäranschluß durchtretenden Primärmediums korreliert ist, und dass am Sekundäranschluß das Sekundärmedium mit einem Druck austritt, der gleich P₂=Pₘₐₓ-f (P_{S}) ist, wobei f (P_{S}) eine Funktion des Steuer- oder Regelungsdruckes P_{S} ist.

Durch die erfindungsgemäßen Maßnahmen wird in vorteilhafter Art und Weise ein Ventil geschaffen, welches sich dadurch auszeichnet, dass am Sekundäranschluß das Sekundärmedium mit dem Druck P₂ austritt, der direkt korreliert mit dem am Steuer- oder Regelungsanschluß auftretenden Steuerdruck P_{S} ist.

Erfindungsgemäße Ventile eignen sich daher insbesondere für den Einsatz bei Werkzeugmaschinen wie Schweissrobotern, bei denen ein doppelwirkender Zylinder auf seiner Seite mit dem Steuer- oder Regelungsdruck P_{S} und auf der anderen Seite mit einem hierzu korrelierten Druck beaufschlagt werden muß.

Eine vorteilhafte Weiterbildung der Erfindung sieht vor, dass das Ventilglied auf der einen Seite vom Betätigungselement der ersten Betätigungseinrichtung, welche mit dem Steuer- oder Regelungsdruck P_{S} korreliert ist, und auf der anderen Seite vom Betätigungselement der zweiten Betätigungseinrichtung, welche mit dem Versorgungsdruck P_{M} korreliert ist, beaufschlagt wird. Eine derartige beidseitige Beaufschlagung des Ventilglieds besitzt den Vorteil, dass die einzelnen Betätigungseinrichtungen relativ einfach aufgebaut sind.

Eine weitere vorteilhafte Weiterbildung der Erfindung sieht vor, dass das Ventilglied nur auf einer Seite von einer doppelwirkenden Betätigungseinrichtung beaufschlagt wird, welche die Funktion der ersten oder zweiten Betätigungseinrichtung integriert. Eine derartige Maßnahme besitzt den Vorteil, dass hierdurch ein relativ kompakt bauendes Ventil ermöglicht wird.

Eine weitere vorteilhafte Weiterbildung der Erfindung sieht vor, dass die zweite Betätigungseinrichtung bzw. die doppelwirkende Betätigungseinrichtung an ihrer Versorgungsdruck-Seite bei einer Feder beaufschlagt wird. Eine derartige Maßnahme besitzt den Vorteil, dass hierdurch ein vom zugeführten Versorgungsmedium unabhängiger Minimaldruck realisiert ist.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Zeichnungen beschrieben werden. Das erfindungsgemäße Ventil erlaubt es dann, die entsprechende Drucksteuerung automatisiert durchzuführen, so dass die bisher hierzu erforderliche Anpassung eines Handdruckminderers nicht mehr erforderlich ist.

Es zeigen:
- Figur 1:: Ein erstes Ausführungsbeispiel eines Druckregel- oder Drucksteuerventils,
- Figur 2:: ein zweites Ausführungsbeispiel eines Druckregel- oder Drucksteuerventils,
- Figur 3:: ein drittes Ausführungsbeispiel eines Druckregel- oder Drucksteuerventils,
- Figur 4:: ein viertes Ausführungsbeispiel eines Druckregel- oder Drucksteuerventils,
- Figur 5:: ein fünftes Ausführungsbeispiel eines Druckregel- oder Drucksteuerventils,
- Figur 6:: ein sechstes Ausführungsbeispiel eines Druckregel- oder Drucksteuerventils,
- Figur 7:: ein siebtes Ausführungsbeispiel eines Druckregel- oder Drucksteuerventils,
- Figur 8:: ein achtes Ausführungsbeispiel eines Druckregel- oder Drucksteuerventils.

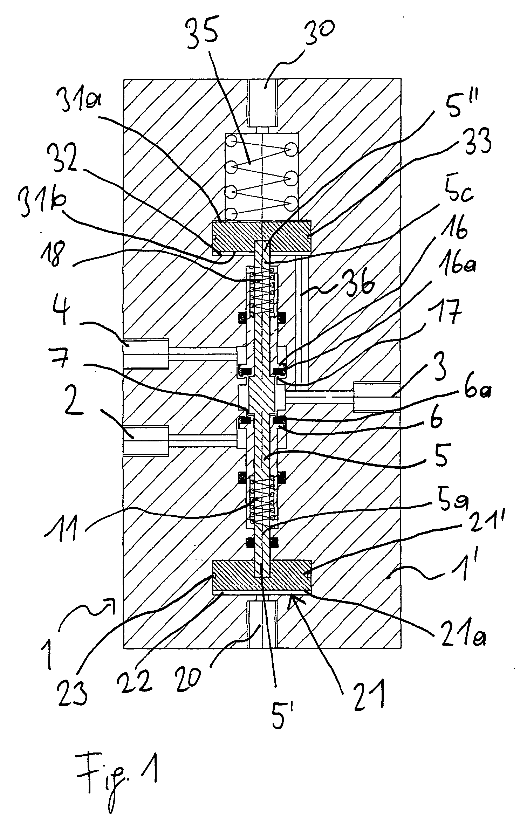

In Figur 1 ist nun ein allgemein mit 1 bezeichnetes Ventil mit einem Primäranschluß 2 für ein Primärmedium mit einem Primärdruck P₁ und einem Sekundäranschluß 3 für ein Sekundärmedium mit einem Sekundärdruck P₂, welches nicht zwingenderweise identisch mit dem Primärmedium sein muß, dargestellt. Im Inneren eines Ventilgehäuses 1' ist ein in Axialrichtung verschiebbar geführtes Ventilglied 5 angeordnet, das - wie weiter unten beschrieben - von zwei Betätigungseinrichtungen 31 und 41 mit jeweils einem Betätigungselement 21' bzw. 31' betätigbar ist. In dem in Figur 1 gezeigten, rückgestellten Zustands des Ventilglieds 5, also in der Ruhestellung des Ventils 1, liegt eine Sitzfläche 6 des Ventilglieds 5 an einem Ventilsitz 7 des Primäranschlusses 2 druckdicht an, wobei vorzugsweise vorgesehen ist, dass die Sitzfläche 6 eine umlaufende Dichtung 6a aufweist, die mit dem vorzugsweise als Ringschneide ausgeführten Ventilsitz 7 derart zusammenwirkt, dass im geschlossenen Zustand des Ventilglieds 5 eine Linienberührung zwischen Sitzfläche 6 und Ventilsitz 7 ausgebildet ist und ein Durchdringen des Primärmediums zum Sekundäranschluß 3 verhindert wird. Eine einen unteren Teil 5a des Ventilglieds 5 beaufschlagende Feder 11 bewirkt, dass ohne eine entsprechende Beaufschlagung des Ventilglieds 5 die Sitzfläche 6 durch die rückstellende Kraft der Feder 11 gegen den Ventilsitz 7 des Primäranschlusses 2 gedrückt wird.

Im hier gezeigten Ausführungsbeispiel weist das Ventil 1 noch des weiteren einen Tertiäranschluß 4 für ein Tertiärmedium mit einem Teritärdruck P₃, welches wiederum nicht notwendigerweise mit dem Primär- und/oder dem Sekundärmedium identisch zu sein braucht. In der Regel wird der Tertiäranschluß 4 zur Lüftung des Ventils 1 verwendet, dergestalt, dass in einer Entlüftungsstellung des Ventils 1 eine Verbindung zwischen Sekundäranschluß 3 und Tertiäranschluß 4 herstellbar ist, so dass das Sekundärmedium über den Tertiäranschluß 4 entweichen kann.

Um nun diese Verbindung herstellen zu können, dient ein Ventilsitz 17, der mit einer eine umlaufende Dichtung 16a aufweisenden Sitzfläche 16 des Ventilglieds 5 zusammenwirkt. Der Ventilsitz 17 ist hiermit wiederum vorzugsweise als eine Ringschneide ausgebildet, so dass im geschlossenen Zustand des Ventilsitzes 17 ein Durchtritt des Sekundärmediums oder des Tertiärmediums vom Sekundäranschluß 3 zum Tertiäranschluß 4 und umgekehrt verhindert ist.

Ein oberer Teil 5c des Ventilglieds 5 wird von der rückstellenden Kraft einer weiteren Feder 18 beaufschlagt. Ein derartiges Ventil 1 ist - wie bereits erwähnt - aus der EP 1 146 268 sowie der DE-U1 9 202 519 bekannt, wobei zur Vermeidung von Wiederholungen bezüglich der weiteren Ausgestaltung eines derartigen Ventil 1 auf die vorgenannten Druckschriften verwiesen und die in diesen Druckschriften offenbarte technische Lehre zur durch diese Bezugnahme explizit in die Offenbarung der vorliegenden Anmeldung mit einbezogen werden soll.

Dieser bekannte Aufbau soll nun dahingehend weitergebildet werden, dass beim beschriebenen Ventil 1 sekundärseitig ein Druck P₂=Pₘₐₓ-f (P_{S})auftritt, wenn über einen Steuer- oder Regelanschluß 20 ein Steuer- oder Regeldruck P_{S} zugeführt wird und an dem zweiten Betätigungselement 31' ein Maximaldruck Pₘₐₓ anliegt.

Hierzu weist das Ventil 1 das erste Betätigungselement 21' auf, welches das in Figur 1 untere, erste Ende 5' des Ventilglieds 5 beaufschlagt. Das in einer Kammer 22 geführte und gegenüber dieser Kammer 22 durch eine umlaufende Dichtung 23 abgedichtete Betätigungselement 21' wird an seiner ersten Druckbeaufschlagungsfläche 21a mit dem über den Steuer- und/oder Regelanschluß 20 zugeführten, unter dem Steuer- oder Regeldruck P_{S} stehende Steuer- oder Regelmedium beaufschlagt und die dadurch entstehende Verschiebebewegung des ersten Betätigungselements 21' in seiner Kammer 22 wird in eine entsprechende Verschiebung des Ventilglieds 5 umgesetzt.

Ein dem ersten Ende 5' gegenüber liegendes Ende 5" des Ventilglieds 5 wird von dem zweiten Betätigungselement 31' der zweiten Betätigungseinrichtung 31 des Versorgungsanschlusses 30 beaufschlagt. Das zweite Betätigungselement 31' ist wiederum in einer entsprechenden Kammer 32 axialverschieblich gelagert und wird von einem umlaufenden Dichtungselement 33 gegenüber der Kammer 32 abgedichtet. Eine erste Druckbeaufschlagungsfläche 31a des zweiten Betätigungselements 31' wird dabei mit dem Maximaldruck Pₘₐₓ beaufschlagt, der sich im hier beschriebenen Fall aus dem Druck P_{F}, welche eine (optional vorsehbare) Feder 35 auf das Betätigungselement 31' ausgeübt, und dem Druck P_{M}, den ein über den Versorgungsanschluß 30 zugeführtes Versorgungsmedium aufweist, zusammensetzt.

In Figur 1 ist vorgesehen, dass die Druckbeaufschlagungsflächen 21a und 31a der beiden Betätigungselemente 21' und 31' flächenmäßig gleich groß ausgebildet sind, wodurch sich eine direkte Korrelation zwischen dem am Steuer- oder Regelanschluß 20 anliegenden Druck P_{S} und dem am Sekundäranschluß 2 auftretenden Druck P₂ gemäß P₂=Pₘₐₓ-P_{S} ergibt, d. h., dass der am Steuer- oder Regelanschluß 20 auftretende Druck P_{S} "gespiegelt" am Sekundäranschluß 2 auftritt. Dem Fachmann ist klar ersichtlich, dass er durch eine Änderung der Flächenverhältnisse der Druckbeaufschlagungsflächen 21a und 31a der Betätigungselemente 21' und 31' eine andere Korrelation zwischen P_{S} und P₂ erzielen kann.

Die Funktionsweise des beschriebenen Ventils 1 ist nun wie folgt:

Wird das Betätigungselement 21' mit dem Druck P_{S} beaufschlagt, so wirkt eine Kraft F_{S}, die gleich den Produkt aus dem Druck P_{S} und der Fläche A₁ der ersten Druckbeaufschlagungsfläche 21a ist, auf das Ventilglied 5, welche entgegengesetzt gerichtet zu der durch das zweite Betätigungselement 31' auf das zweite Ende 5" des Ventilglieds 5 aufgebrachten Kraft Fₘₐₓ=Pₘₐₓ x A₂ ist, wobei A₂ die Fläche der ersten Druckbeaufschlagungsfläche 31 a bezeichnet.

Ist nun - bei einer Flächengleichheit von A₁ und A₂- der Steuer- oder Regeldruck P_{S} größer oder gleich dem Maximaldruck Pₘₐₓ, so bewirkt dies, dass der Durchgang zwischen dem Primäranschluß 2 und dem Sekundäranschluß 3 geschlossen ist, mit der Folge, dass am Sekundäranschluß 3 ein Druck P₂=0 auftritt.

Ist jedoch der Druck P_{S} kleiner als der Druck Pₘₐₓ, so ergibt sich aus den entgegengesetzt wirkenden Kräften F_{S} und Fₘₐₓ eine resultierende Kraft, die eine Verschiebung des Ventilglieds 5 in Figur 1 nach unten und somit eine Öffnung des Durchgangs zwischen dem Primäranschluß 2 und dem Sekundäranschluß 3 bewirkt. Das einen Druck P₁ aufweisende Primärmedium strömt somit vom Primäranschluß 2 zum Sekundäranschluß 3. Da aber der Sekundäranschluß 2 über eine Verbindungsleitung 36 mit der Kammer 32 der zweiten Betätigungseinrichtung 31 verbunden ist, wird eine der ersten Druckbeaufschlagungsfläche 31a gegenüber liegende zweite Druckbeaufschlagungsfläche 31b des Betätigungselements 31' entgegengesetzt orientiert zum Maximaldruck Pₘₐₓ druckbeaufschlagt, wodurch eine in die Ruhestellung des Ventilglieds 5 treibende Kraftkomponente erzeugt wird, die der Auslenkung des Ventilglieds 5 entgegenwirkt. Es stellt sich dann eine Gleichgewichtslage ein, in der dann am Sekundäranschluß 3 ein Sekundärdruck P₂=Pₘₐₓ-P_{S} für den Fall, dass Reibungsverluste vernachlässigt und die Flächen A₁ und A₂ der Druckbeaufschlagungsflächen 21a und 31a der Betätigungselemente 21', 31' gleich groß sind, auftritt. Dem Fachmann ist nun aus obiger Beschreibung ersichtlich, wie er die entsprechenden Flächenverhältnisse der Druckbeaufschlagungsflächen abändern muß, wenn der Zusammenhang zwischen P_{S} und P₂ nicht P₂=Pₘₐₓ-P_{S}, sondern P₂=Pₘₐₓ-f (P_{S}) sein soll, also wenn der Druck P₂ nicht direkt korreliert mit dem Druck P_{S} sein soll.

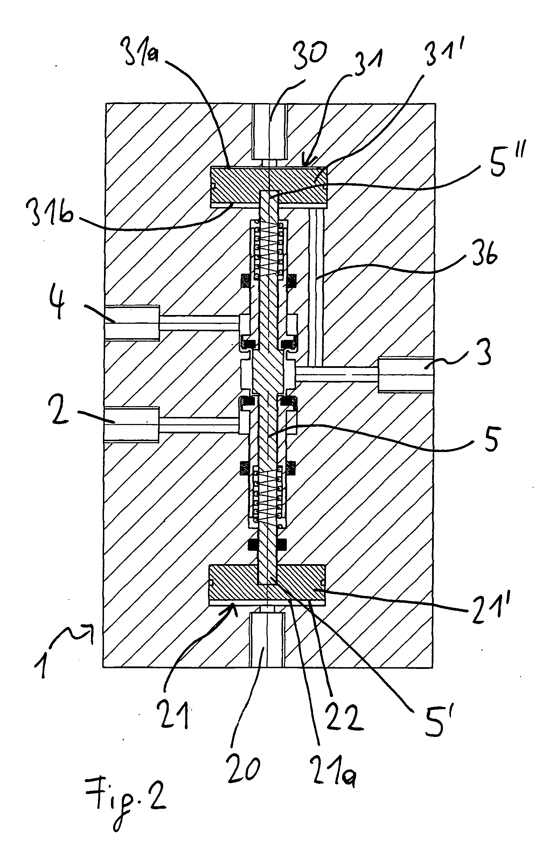

In Figur 2 ist nun ein zweites Ausführungsbeispiel eines Ventils 1 dargestellt, welches seinem prinzipiellen Aufbau nach demjenigen des ersten Ausführungsbeispiels entspricht, so dass einander entsprechende Bauteile mit den gleichen Bezugszeichen versehen und nicht mehr näher beschrieben werden. Der wesentliche Unterschied zwischen dem ersten und zweiten Ausführungsbeispiel besteht darin, dass hierbei die Feder 35 nicht mehr vorgesehen ist. Der Druck Pₘₐₓ wird beim zweiten Ausführungsbeispiel vielmehr im wesentlichen ausschließlich durch den Druck P_{M} des Versorgungsmediums bestimmt.

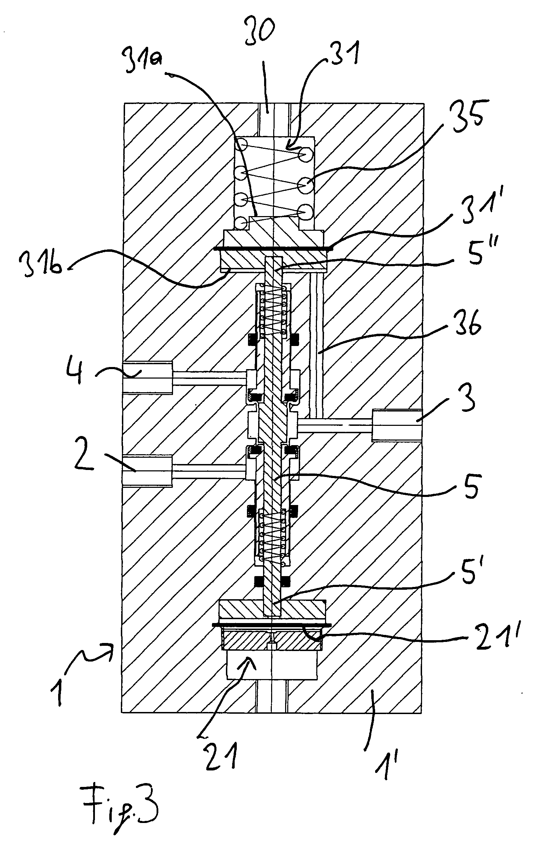

Das in Figur 3 dargestellte dritte Ausführungsbeispiel entspricht seinem prinzipiellen Aufbau nach wiederum dem ersten Ausführungsbeispiel, so dass auch hier - wie auch bei den folgenden fünf Ausführungsbeispielen - einander entsprechende Bauteile mit gleichen Bezugszeichen versehen und nicht mehr näher beschrieben werden.

Der wesentliche Unterschied zwischen dem ersten und dem dritten Ausführungsbeispiel besteht nun darin, dass die beiden Betätigungselemente 21', 31', nicht - wie beim ersten Ausführungsbeispiel - als Kolben, sondern als Membrane ausgebildet sind, wobei es natürlich auch möglich ist, nur eines der beiden Betätigungselemente 21', 31' als einen Kolben und das andere als eine Membran auszubilden.

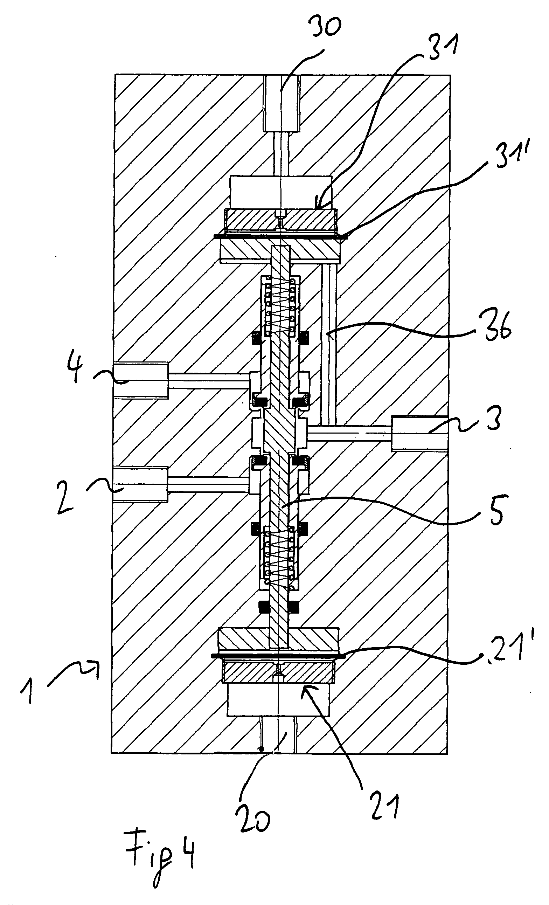

Das in Figur 4 dargestellte vierte Ausführungsbeispiel entspricht seinem prinzipiellen Aufbau nach wiederum dem zweiten Ausführungsbeispiel, mit der Maßgabe, dass auch hier die Betätigungselemente 21' und 31' als Membrane ausgebildet sind.

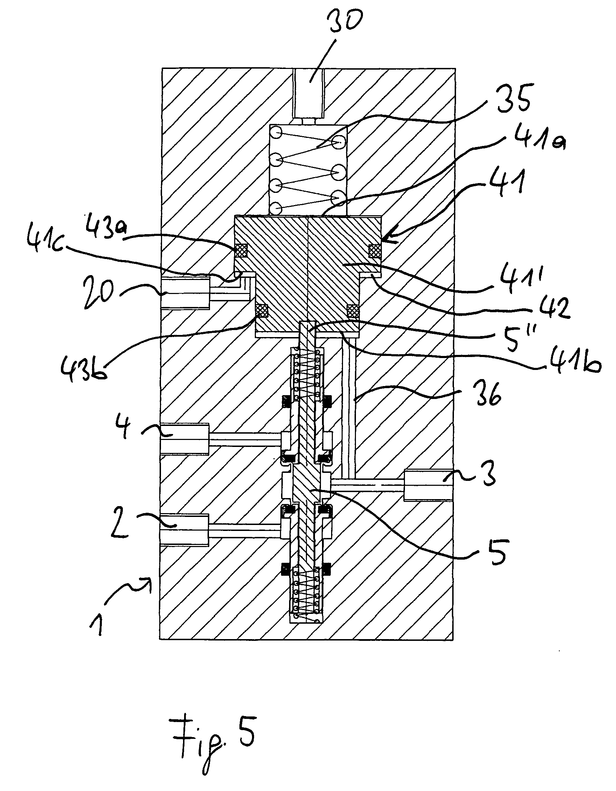

In Figur 5 ist nun ein fünftes Ausführungsbeispiel eines Ventils 1 dargestellt, welches sich von den Ausführungsbeispielen der Figuren 1-4 dadurch unterscheidet, dass nun nicht mehr zweite separate, das Ventilglied 5 an jeweils einem Ende 5', 5" beaufschlagende Betätigungseinrichtungen 21, 31 vorgesehen sind. Das fünfte Ausführungsbeispiel des Ventils 1 ist vielmehr derart konstruiiert, dass ein Ende, im hier gezeigten Fall das obere Ende 5", des Ventilglieds 5 von einem doppelt-wirkenden Betätigungselement 41', das im hier gezeigten Fall als ein Kolben ausgebildet ist, beaufschlagt wird. Die Betätigungseinrichtung 41 stellt somit in funktioneller Hinsicht die Kombination der Betätigungseinrichtungen 21 und 31 dar. Die beiden Betätigungselemente 21' und 31' sind somit im Betätigungselement 41' der Betätigungseinrichtung 41 baulich und funktionell zusammengefaßt.

Das Betätigungselement 41' der Betätigungseinrichtung 41 ist in einer Kammer 42 verschiebbar geführt und über zwei Dichtungen 43a und 43b gegenüber der Kammer 42 abgedichtet. Das Betätigungselement 41 weist wiederum eine erste Druckbeaufschlagungsfläche 41a auf, deren Funktion der Fläche 31a des Betätigungselements 31' der ersten vier Ausführungsbeispiele entspricht. Auf die erste Druckbeaufschlagungsfläche 41a wirkt somit der Druck Pₘₐₓ.

An der der ersten Druckbeaufschlagungsfläche 41 a gegenüber liegenden Seite des Betätigungselements 41' der Betätigungseinrichtung 41 ist eine zweite Druckbeaufschlagungsfläche 41b angeordnet, deren Funktion wiederum der zweiten Druckbeaufschlagungsfläche 31b des Betätigungselements 31' der ersten vier Ausführungsbeispiele entspricht, so dass diese zweite Druckbeaufschlagungsfläche 41b bei geöffnetem Durchgang zwischen Primäranschluß 2 und Sekundäranschluß 3 über die Verbindungsleitung 36 mit dem Druck P₁ beaufschlagt wird.

Des weiteren weist das Betätigungselement 41' noch eine dritte Druckbeaufschlagungsfläche 41c auf, deren Funktion der Druckbeaufschlagungsfläche 21a des ersten Betätigungselements 21' entspricht. Wie aus der Figur 5 leicht ersichtlich ist, wird der Steuer- oder Regelungsanschluß 20 direkt zu der dritten Druckbeaufschlagungsfläche 41c geführt, so dass die Druckbeaufschlagungsfläche 41c mit dem Steuer- oder Regeldruck P_{S} beaufschlagt wird.

Um wieder eine direkte Korrelation zwischen dem am Steuer- oder Regelanschluß 20 anliegenden Steuer- oder Regeldruck P_{S} mit dem am Sekundäranschluß 3 auftretenden Ausgangsdruck P₂ gemäß P₂=Pₘₐₓ-P_{S} zu erreichen, ist wiederum vorzusehen, dass die Fläche A₁ der Druckbeaufschlagungsfläche 41a gleich der Summe der Flächen A₂ und A₃ der Druckbeaufschlagungsflächen 41b und 41c ist.

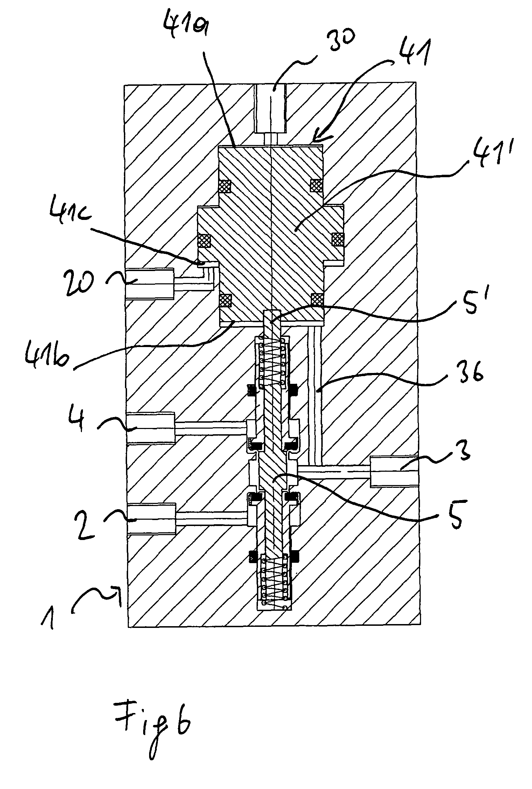

Das in Figur 6 dargestellte sechste Ausführungsbeispiel unterscheidet sich vom fünften Ausführungsbeispiel der Figur 5 wiederum dadurch, dass hierbei die Feder 35 entfällt, so dass der die erste Druckbeaufschlagungsfläche 41a beaufschlagende Druck im wesentlichen durch den Druck P_{M} des über den Versorgungsanschluß 30 zugeführten Mediums festgelegt wird.

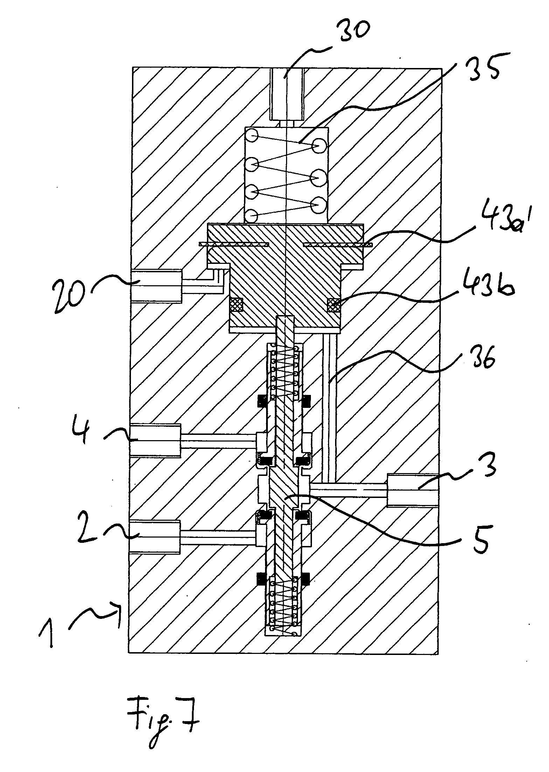

Das siebte Ausführungsbeispiel der Figur 7 unterscheidet sich vom fünften Ausführungsbeispiel der Figur 5 wiederum dadurch, dass anstelle der umlaufenden Dichung 43 eine Membran 43a' die Dichtungsfunktion zwischen Betätigungselement 41' und der Kammer 42 übernimmt.

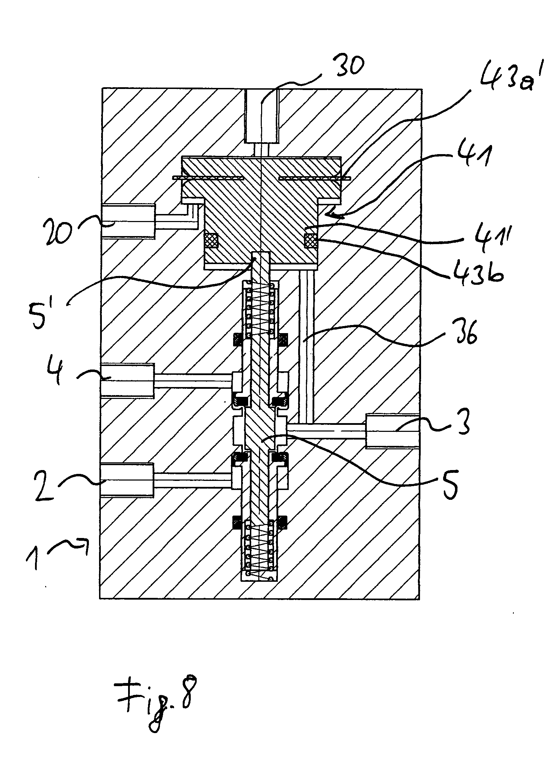

Das achte Ausführungsbeispiel der Figur 8 entspricht im wesentlichen dem Ausführungsbeispiel der Figur 6, wobei wiederum anstelle der Dichtung 43a eine Membran 43a' verwendet wird.

## Patentansprüche

1. Ventil zur Regelung oder Steuerung eines Drucks, welches ein Ventilglied (1) aufweist, das zumindest von einer Ruhestellung, in der durch das Ventilglied (5) der Durchgang zwischen einem Primäranschluß (2) und einem Sekundäranschluß (3) des Ventils (1) gesperrt ist, in eine Arbeitsstellung, in der dieser Durchgang zumindest teilweise freigegeben ist, bewegbar ist, wobei das Ventil (1) mindestens eine Betätigungseinrichtung (21, 31; 41) mit einem Betätigungselement (21', 31'; 41') aufweist, dessen durch eine Druckbeaufschlagung erzeugte Auslenkung auf das Ventilglied (5) übertragbar ist, **dadurch gekennzeichnet, dass** das Ventil (1) einen Steuer- oder Regelungseingang (20) aufweist, durch den dem Ventil (1) ein Steuer- oder Regelungsmedium mit einem Steuer- oder Regeldruck P_{S} zuführbar ist, und einen Versorgungseingang (30), durch den dem Ventil (1) ein Versorgungsmedium mit einem Druck P_{M} zuführbar ist, aufweist, dass durch ein Betätigungselement (21') einer ersten Betätigungseinrichtung (21) das Ventilglied (5) mit einer dem Steuer- oder Regeldruck P_{S} entsprechenden Kraft F_{S} und durch ein zweites Betätigungselement (31'; 41) einer zweiten Betätigungseinrichtung (31; 41) durch eine der Kraft F_{S} entgegenwirkenden Kraft Fₘₐₓ beaufschlagt wird, welche mit dem Druck P_{M} des über den Versorgungseingang (30) zugeführten Versorgungsmediums korreliert ist, dass das zweite Betätigungselement (31') über eine vom Sekundäranschluß (3) abzweigende Verbindungsleitung (36) mit einer Kraft F₁ beaufschlagbar ist, die mit dem Druck P₁ des vom Primäranschluß (2) zum Sekundäranschluß (3) durchtretenden Primärmediums korreliert ist, und dass am Sekundäranschluß (3) das Sekundärmedium mit einem Druck P₂ austritt, der gleich P₂=Pₘₐₓ-f (P_{S}) ist, wobei f (P_{S}) eine Funktion des Steuer- oder Regelungsdruckes P_{S} ist.

2. Ventil nach Anspruch 1, **dadurch gekennzeichnet, dass** ein erstes Ende (5') des Ventilglieds (5) von dem Betätigungselement (21') der ersten Betätigungseinrichtung (21) und dass dem ersten Ende (5') gegenüberliegende zweite Ende (5") des Ventilglieds (5) vom Betätigungselement (31') der zweiten Betätigungseinrichtung (31) beaufschlagt ist.

3. Ventil nach einem der vorangehenden Ansprüche, **dadurch gekennzeichnet, dass** das Betätigungselement (21') der ersten Betätigungseinrichtung (21) eine Druckbeaufschlagungsfläche (21a) aufweist, die mit dem über den Steuer- oder Regelanschluß (20) zugeführten Steuer- oder Regelmedium mit dem Steuer- oder Regeldruck P_{S} beaufschlagbar ist.

4. Ventil nach einem der vorangehenden Ansprüche, **dadurch gekennzeichnet, dass** das Betätigungselement (31') der zweiten Betätigungseinrichtung (31) eine erste Druckbeaufschlagungsfläche (31a) aufweist, die mit dem über den Versorgungsanschluß (30) zugeführte Versorgungsmedium mit Druck P_{M} beaufschlagbar ist.

5. Ventil nach einem der vorangehenden Ansprüche, **dadurch gekennzeichnet, dass** die erste Druckbeaufschlagungsfläche (31a) des Betätigungselements (31') der zweiten Betätigungseinrichtung (31) durch eine Feder (35) mit einem Druck P_{F} beaufschlagbar ist.

6. Ventil nach einem der vorangehenden Ansprüche, **dadurch gekennzeichnet, dass** das Betätigungselement (31') der zweiten Betätigungseinrichtung (31) eine zweite Druckbeaufschlagungsfläche (31b) aufweist, die mit dem über die Verbindungsleitung (36) zugeführten Primärmedium mit dem Druck P₁ beaufschlagbar ist.

7. Ventil nach Anspruch 1, **dadurch gekennzeichnet, dass** ein Ende (5") des Ventilglieds (5) von einem Betätigungselement (41) einer funktionell die erste Betätigungseinrichtung (21) und die zweite Betätigungseinrichtung (31) zusammenfassenden doppelwirkenden Betätigungseinrichtung (41) beaufschlagt ist.

8. Ventil nach einem der vorangehenden Ansprüche, **dadurch gekennzeichnet, dass** die doppelwirkende Betätigungseinrichtung (41) eine erste Druckbeaufschlagungsfläche (41a), die mit dem Druck P_{M} des über den Versorgungsanschluß (30) zugeführten Versorgungsmediums und/oder dem Druck P_{F} der Feder (35) beaufschlagbar ist, eine zweite Druckbeaufschlagungsfläche (41b), die mit dem Druck P₁ des über die Verbindungsleitung (36) zugeführten Primärmediums beaufschlagbar ist, und eine dritte Druckbeaufschlagungsfläche 41c, die mit dem über den Steuer- oder Regelanschluß (20) zugeführten Steuer- oder Regelungsmedium mit dem Steuer- oder Regelungsdruck P_{S} beaufschlagbar ist, aufweist.

9. Ventil nach einem der vorangehenden Ansprüche, **dadurch gekennzeichnet, dass** die die Betätigungselemente (21', 31', 41') in einer Kammer (22, 32, 42) verschiebbar geführt sind.

10. Ventil nach einem der vorangehenden Ansprüche, **dadurch gekennzeichnet, dass** mindestens ein Betätigungselement (21', 31', 41') als ein Kolben ausgeführt ist.

11. Ventil nach einem der vorangehenden Ansprüche, **dadurch gekennzeichnet, dass** mindestens ein Betätigungselement (21', 31', 41') als eine Membran ausgeführt ist.

12. Ventil nach einem der vorangehenden Ansprüche, **dadurch gekennzeichnet, dass** die Fläche A₁ der ersten Druckbeaufschlagungsfläche (21a) des Betätigungselements (21') der ersten Betätigungseinrichtung (21) gleich der Fläche A₂ der ersten Druckbeaufschlagungsfläche (31a) des Betätigungselements (31') der zweiten Betätigungseinrichtung (31) ist.

13. Ventil nach einem der vorangehenden Ansprüche, **dadurch gekennzeichnet, dass** die Fläche A₁ der ersten Druckbeaufschlagungsfläche (41a) des doppelwirkenden Betätigungselements (41') der doppelwirkenden Betätigungseinrichtung (41) gleich der Fläche A₂ der zweiten Druckbeaufschlagungsfläche (41b) und wiederum gleich der Fläche A₃ der dritten Druckbeaufschlagungsfläche (41c) ist.

14. Ventil nach einem der vorangehenden Ansprüche, **dadurch gekennzeichnet, dass** der untere Teil (5a) und/oder der obere Teil (5c) des Ventilglieds (5) durch eine rücktreibende Feder (11; 18) beaufschlagbar ist, welche bewirkt, dass ohne eine entsprechende Beaufschlagung des Ventilglieds (5) durch die Betätigungskraft (F) der Betätigungsvorrichtung (30) die Sitzfläche (6) des unteren Teils (5a) bzw. die Sitzfläche (16) des oberen Teils (5c) des Ventilglieds (5) gegen den Ventilsitz (7) des Primäranschlusses (2) bzw. den Ventilsitz (17) des Sekundäranschlusses (3) gepreßt wird.

15. Ventil nach einem der vorangehenden Ansprüche, **dadurch gekennzeichnet, dass** das Ventil (1) einen Tertiäranschluß (4) aufweist.
